# EUROPEAN PATENT SPECIFICATION

(11) **EP 3 003 746 B1**
(45) Date of publication and mention of the grant of the patent: **05.09.2018**
(21) Application number: 13745174.6
(22) Date of filing: 07.06.2013
(51) Int. Cl.: B60H 1/00

(54) **METHOD FOR REGULATING THE THERMAL CONTROL SYSTEM OF A CABIN OF A VEHICLE**
VERFAHREN ZUR REGELUNG DES THERMISCHEN STEUERSYSTEMS EINER KABINE EINES FAHRZEUGS
METHOD FOR REGULATING THE THERMAL CONTROL SYSTEM OF A CABIN OF A VEHICLE

(43) Date of publication of application: 13.04.2016
(73) Proprietor: Volvo Truck Corporation, 405 08 Göteborg (SE)
(72) Inventor: MOTHIER, Ronan, 38460 Dizimieu (FR)
(74) Representative: Volvo Technology Corporation
(86) International application number: PCT/IB2013/001431
(87) International publication number: WO 2014/195752

(56) References cited:
- EP-A1- 1 366 936
- DE-C1- 19 942 286
- FR-A1- 2 808 244
- JP-A- 2007 022 180
- JP-A- 2007 261 369

## Description

### Field of the invention

The present invention relates to a method for regulating the thermal control system of a cabin of a vehicle, depending on the sun position relative to the cabin.

### Technological background

Vehicles have been provided with a thermal control system of their cabin for many years. Typically, an air flow is blown into the cabin, said air flow being heated when the outside temperature is low, especially in winter, and cooled when the outside temperature is high, especially in summer.

A conventional thermal control system typically comprises an electronic control unit which is capable of automatically controlling some parameters of the air flow in order to reach a preset target temperature in the cabin - in a transient mode - and to maintain said target temperature in the cabin - in a steady state mode. Said parameters can include the air flow temperature, the air flow rate and the air distribution, i.e. the respective rates of the air sub flows directed to distinct locations inside the vehicle cabin. These parameters are generally controlled by the electronic control unit in order to regulate the cabin temperature as effectively as possible.

However, when the sun is located in front of the cabin, the solar radiation through the windscreen leads to a local temperature increase and causes discomfort for the cabin occupant.

One solution to this problem is for the cabin occupant to manually adapt the parameters of the thermal control system in order to compensate for the solar radiation. However, this solution is not satisfactory for many reasons. On the one hand, this would generally prevent the thermal control system to control the cabin temperature efficiently and within an acceptable response time. On the other hand, it is not desirable for safety reasons that a vehicle driver looks at the input device and makes several settings while going on driving. These issues are all the more critical as the sun position relative to the cabin may change often, as the vehicle is likely to turn. As a result, for example, the cabin occupant would have to change the settings each time the sun goes from the front of the vehicle to the back or the side of the vehicle.

Another solution consists in detecting when the sun is located in front of the vehicle and to activate a compensation process. This can be achieved by means of a sun sensor. However, sun sensors are fairly expensive. Besides, it is generally difficult to install a sun sensor on the cabin dashboard, for packaging reasons. Moreover, sun sensors can be complex to calibrate, and they do not always allow to get a useful and representative signal. Another solution is proposed in document JP 2007 261369 A, which discloses a method for regulating the thermal control system of a cabin of a vehicle depending on the solar radiation through the windscreen, comprising: measuring an outside ambient temperature, measuring an inside ambient temperature, measuring a windscreen temperature on the right and left part of the windscreen wherein, when the temperature of the windscreen is changing, the inside temperature is corrected by a temperature correction amount to take into account solar radiation. It therefore appears that, from several standpoints, there is room for improvement in thermal control systems and methods for vehicle cabins.

### Summary

It is an object of the present invention to improve the operation of the thermal control system of a vehicle cabin, to improve the cabin occupant's comfort, taking into account the sun position.

To that end, the invention concerns a method for regulating the thermal control system of a cabin of a vehicle depending on the sun position relative to the cabin, the method comprising:
- measuring an outside ambient temperature (OAT);
- measuring an inside ambient temperature (IAT);
- measuring a windscreen temperature (WT);
- determining a reference temperature (Tref) according to the following rules:
   if OAT > IAT + δ, then Tref = OAT
   if IAT > OAT - δ, then Tref = IAT
   where δ is a predetermined value which can be positive or negative
- comparing WT and Tref
- if Δ = (WT - Tref) is higher than a predetermined threshold value (Δth), activating a compensation process comprising modifying at least one operational parameter of the thermal control system in order to reduce the thermal effect of the solar radiation through the windscreen for a cabin occupant.

Thus, the invention makes it possible to automatically compensate for the temperature increase felt by the cabin occupant, in case the sun is located in front of the vehicle, without requiring a manual action of the cabin occupant.

Moreover, the method according to the invention does not require the use of a complex and/or expensive sensor insofar as said method makes use of the windscreen temperature, which can be obtained by a sensor that is common, inexpensive, and that provides reliable data.

In practice, the temperatures inside the cabin and outside the cabin are measured, one of them being used as a reference temperature which is compared to the windscreen temperature. A too high difference between the windscreen temperature and the reference temperature means that the sun is located in front of the cabin, which makes the cabin occupant feel warm, even if the thermal control system is properly working and if the temperature inside the cabin does not significantly increase. This can happen either in summer, when the cooling may not be sufficient to compensate for the solar radiation through the windscreen, or in winter, when the heating may be felt as excessive due to this solar radiation.

In concrete terms, OAT > IAT + δ during warm or hot days, especially in summer, while IAT > OAT - δ during cooler days, especially in winter or in transition periods in autumn and spring.

By comparing WT to a temperature reference the definition of which depends on the weather conditions, rather than always comparing WT to IAT, or always to OAT, brings several advantages.

First of all, this helps preventing too frequent activations of the compensation process, which would not be desirable, in particular for the cabin occupant's comfort, but also for the service life of the thermal control system.

Moreover, this makes it possible to get a more reactive and more precise regulation of the thermal control system.

In addition, this allows to more easily set a threshold value Δth, which corresponds to a user acceptable over-heating but does not depend only on the outside ambient temperature OAT or on the inside ambient temperature IAT.

In practice, in winter (or more generally in cold or cool days), when the sun is not in front of the vehicle or when the sky is cloudy: OAT<WT<IAT. And when the sun is in the front of the vehicle: OAT<IAT<WT, and the compensation process needs to be activated. Therefore, choosing Tref as IAT ensures the compensation process is activated when needed. If, on the contrary, WT was compared to OAT as Tref, the cases in which the sun is located in front of the vehicle could not be detected, and, as a result, the compensation process would not be activated. Indeed, in winter, OAT is generally lower than WT, whatever the position of the sun relative to the vehicle, because it is cooler outside than inside the cabin and on the windscreen (since the cabin is heated).

Similarly, in summer (or more generally in warm or hot days), when the sun is not in front of the vehicle or when the sky is cloudy: IAT<WT<OAT. And when the sun is in the front of the vehicle: IAT<OAT<WT, and the compensation process needs to be activated. Therefore, comparing WT to IAT as Tref would not allow to detect the cases when the sun is located in front of the vehicle, i.e. the cases when the compensation process should be activated. Indeed, in summer, IAT is generally lower than WT and OAT, because of the cool air blown inside the cabin by the air conditioning system.

Besides, in case IAT=OAT, the compensation process is activated when WT becomes higher that IAT=OAT.

According to an implementation of the invention, Tref can be the maximum temperature (Tmax) between the outside ambient temperature OAT and the inside ambient temperature IAT. This means that δ = 0.

In other words, the invention can concern a regulating method that comprises:
- measuring an outside ambient temperature (OAT);
- measuring an inside ambient temperature (IAT);
- measuring a windscreen temperature (WT);
- comparing WT and the maximum temperature (Tmax) between the outside ambient temperature (OAT) and the inside ambient temperature (IAT);
- if Δ = (WT - Tmax) is higher than a predetermined threshold value (Δth), activating a compensation process comprising modifying at least one operational parameter of the thermal control system in order to reduce the thermal effect of the solar radiation through the windscreen for a cabin occupant.

The operational parameter of the thermal control system which is modified during the compensation process can be the air flow distribution inside the cabin. More precisely, the compensation process can comprise increasing the rate of the air flow directed towards the cabin windscreen. This leads to the formation of an air layer just behind the windscreen, which acts as an isolating layer preventing the windscreen from generating a hot radiation towards the cabin occupant. Alternatively, it could be envisaged to increase the rate of the air flow directed towards the occupant's torso, although this is generally considered as less comfortable.

The operational parameter can be the global air flow rate. In this case, the compensation process comprises increasing said global air flow rate, while the air distribution can remain unchanged.

Alternatively or in addition, the operational parameter can be the air flow temperature, the compensation process comprising decreasing said air flow temperature.

According to an embodiment of the invention, during the compensation process, at least one operational parameter can be modified as a function of the Δ increase. This means that the compensation is all the more important as the difference between the windscreen temperature and the reference temperature increases. In other words, the hotter the windscreen is, the more the regulating method actuates the compensation process.

The operational parameter can be progressively modified as a function of the Δ increase, preferably substantially linearly modified, at least when Δ is lower than a limit value (Δlim).

In an embodiment, the operational parameter can remain substantially constant when Δ is higher than a limit value (Δlim).

For example, the rate of the air flow directed towards the cabin windscreen is increased proportionally to Δ, at least when Δ is lower than a limit value (Δlim).

According to a possible implementation, the rate of the air flow directed towards the cabin is Q1 = Q0 + Qadd, where:
- Q0 is the air flow rate set by the thermal control system when the compensation process is not activated;
- Qadd is an additional air flow rate that is calculated proportionally to a compensation value (Vcomp) determined by the equation Vcomp = Δ - Δth, so that Qadd = R x Vcomp with R being a constant value.

Q0 may depend on the current conditions and cabin occupant's wishes.

The windscreen temperature WT can be measured using a temperature sensor forming part of a defog sensor installed on the cabin windscreen, or more generally to a multipurpose sensor installed on the cabin windscreen. This brings a significant advantage in that the invention makes use of an existing sensor, already installed and used for regulating the temperature in the vehicle cabin, and therefore does not require any additional sensor. Such a typical defog sensor is a sensor which can measure:
- the windscreen contact temperature (WT);
- the inside ambient temperature (IAT) close to the windscreen (for example at a distance of about 4-5 mm);
- and the relative humidity close to the windscreen (for example at a distance of about 4-5 mm).

In case such a defog sensor capable of measuring the inside ambient temperature (IAT) is used, there is no need to provide a separate sensor for measuring IAT.

The defog sensor sends the measured data to a thermal control unit which uses them to calculate a risk of fogging on the windscreen, based on the calculation of the dew point and on the comparison with the windscreen temperature. The thermal control unit is then capable of activating a defogging process. This process can include increasing the rate of the air flow directed towards the windscreen, when the risk of fogging is relatively low, and activating the air conditioning system when the risk becomes higher.

The windscreen temperature WT can be measured using a temperature sensor which is designed to be substantially insensitive to infra red light, in order to make sure that the data measured is the windscreen temperature, it not being influenced by the infra red light. To that end, the temperature sensor can be located in an appropriate housing having a wall opaque to infrared radiation. This allows a more accurate temperature measurement, leading to a reliable regulating method.

δ can be comprised between -5°C and 5°C.

Δth can be comprised between 2 and 5°C, depending for example on the windscreen structure and geometry, such as the opacity, the thickness, the layer composition, the provision of a plastic film, the size and/or the incline of the windscreen.

In an embodiment, the compensation process can be activated only if Δ remains higher than Δth for a predetermined period of time, for example 1 to 5 minutes. This disposition prevents frequent activations of the compensation process for very short periods of time.

These and other features and advantages will become apparent upon reading the following description in view of the drawing attached hereto representing, as a non-limiting example, an embodiment of a vehicle according to the invention.

### Brief description of the drawings

The following detailed description of an embodiment of the invention is better understood when read in conjunction with the appended drawings, it being however understood that the invention is not limited to the specific embodiment disclosed.
Figure 1 is a partial side view of a vehicle having a cabin in which the regulating method of the invention can be implemented;
Figure 2 is a schematic view of the windscreen of the vehicle of Figure 1, showing a defog sensor installed inside the cabin;
Figure 3 is a schematic and partial representation of the vehicle cabin including a thermal control system that can be regulated depending on the sun position with the method according to the invention;
Figure 4 is a graph showing the evolution of OAT, IAT and WT as a function of time and indicating when a compensation process is activated, when OAT > IAT + δ;
Figure 5 is a graph similar to the one of Figure 4, when IAT > OAT - δ.

### Detailed description of the invention

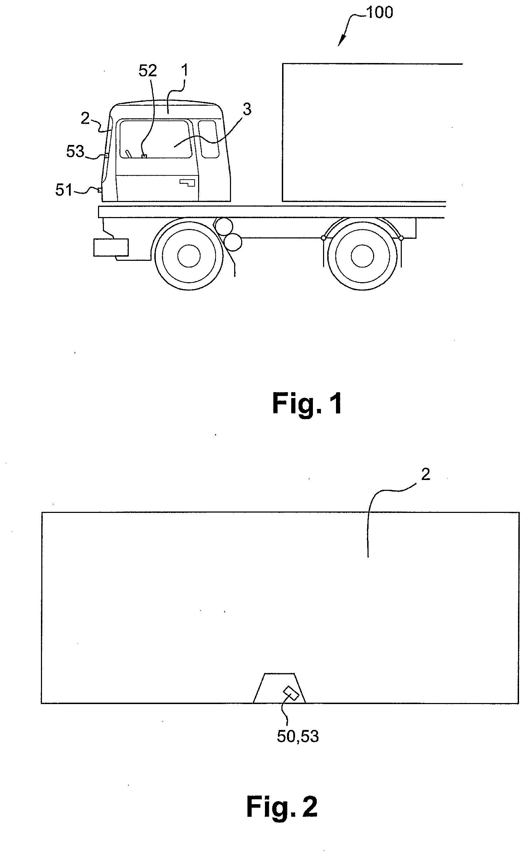

Figure 1 partially shows a vehicle 100 in which the invention can be implemented. The vehicle 100 can be an industrial vehicle such as a truck, although this should not be considered as limitative.

The vehicle 100 comprises a cabin 1 having a windscreen 2 and side windows 3.

The vehicle 100 is further equipped with sensors capable of measuring several temperatures used as input data for controlling the temperature inside the cabin 1. On figure 1 are schematically shown a first sensor 51 for measuring the outside ambient temperature OAT, a second sensor 52 for measuring the inside ambient temperature IAT, and a third sensor 53 for measuring the windscreen temperature WT, more precisely the windscreen contact temperature on the interior side of the cabin 1.

As shown in Figure 2, the third sensor 53 for measuring the windscreen temperature WT can be part of a defog sensor 50 installed on the windscreen 2, inside the cabin 1. The defog sensor 50 is generally speaking a multipurpose sensor installed on the cabin windscreen and designed to measure several data sent to a thermal control unit for regulating the temperature and the air distribution inside the cabin and preventing fogging.

In a non limitative embodiment, the third sensor 53 can be designed to be substantially insensitive to infra red light.

Although the second sensor 52 is shown on Figure 1 as a separate sensor, it can be part of the defog sensor 50.

The vehicle is equipped with a thermal control system 4 for the cabin 1, which makes it possible to bring and maintain the temperature IAT in the cabin 1 to a target temperature Tt that is preset by the user, i.e. the cabin occupant, who is typically the vehicle driver.

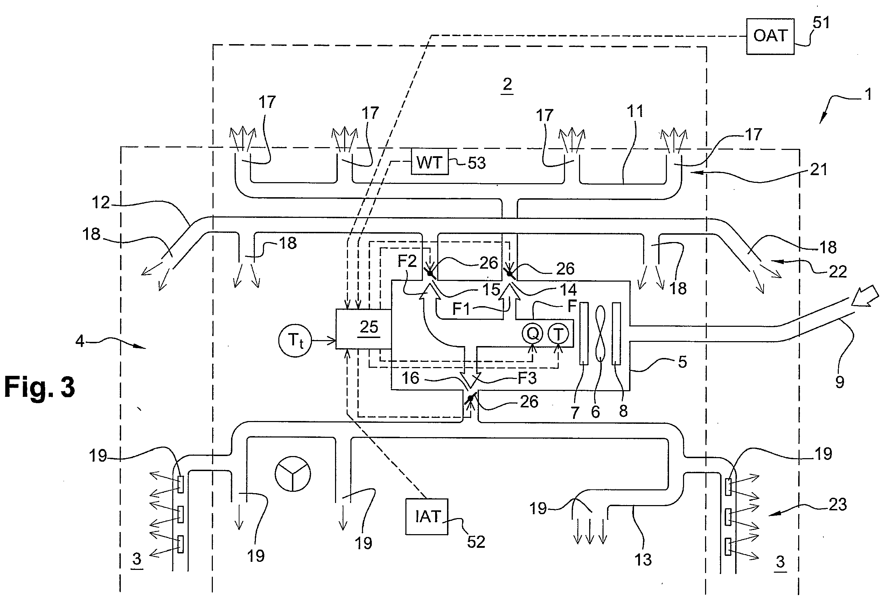

With reference to Figure 3, the thermal control system 4 comprises a thermal unit 5 which typically includes a fan 6, a heater 7 and a cooler 8.

By means of the fan 6, outside air can be sucked in a channel 9, can enter the thermal unit 5 and pass through the heater 7 and the cooler 8. Therefore, the thermal unit 5 is capable of providing a heated or cooled air flow F which will be directed towards the cabin 1.

In practice, the heater 7 can be a radiator, and the cooler 8 can be an evaporator forming part of a refrigerant circuit of an air conditioning system. Such a refrigerant circuit typically carries a refrigerant in a loop through a compressor, a condenser, an expander and an evaporator capable of cooling an air flow directed towards the cabin.

The thermal control system 4 also comprises air circuits connected to the thermal unit 5 and designed to carry some of the air flow towards various locations in the cabin 1 and to blow it inside the cabin. More precisely, in the embodiment shown in Figure 3, the system 4 comprises a first, a second and a third air circuits 11, 12, 13. However, according to the invention, the number of circuits is not limited to three.

Each air circuit 11, 12, 13 is connected to at least one dedicated outlet 14, 15, 16 provided on the thermal unit 5 and is capable of directing an air sub flow F1, F2, F3 towards the cabin 1 through at least one opening 17, 18, 19. Each air sub flow forms at least part of the air flow. In other words, the rate Q1, Q2, Q3 of each sub flow F1, F2, F3 can range between 0% and 100% of the rate Q of the air flow F.

The openings 17, 18, 19 of the first, second and third air circuits 11, 12, 13 are located respectively in a distinct first, second and third distribution areas 21, 22, 23 in the cabin 1.

For example, the first distribution area 21, in which are located the first openings 17 of the first air circuit 11, can include the windscreen 2 and/or the head of the cabin occupant. In other words, the first distribution area 21 can be situated in the upper part of the cabin 1.

The second distribution area 22, in which are located the second openings 18 of the second air circuit 12, can include the torso of the cabin occupant and/or the front part of the side windows 3. In other words, the second distribution area 22 can be situated in the middle part of the cabin 1. Although this is not illustrated in Figure 3, it has to be noted that there could be provided a separate air circuit designed to direct an air flow towards the front part of the side windows 3, not provided with flaps, in order to always ensure the distribution of an air flow towards this area and therefore to always ensure defogging of the front part of the side windows 3.

As regards the third distribution area 23, in which are located the third openings 19 of the third air circuit 13, it can include the feet of the cabin occupant and/or the area located along the lower part of the side doors. In other words, the third distribution area 23 can be situated in the lower part of the cabin 1.

The thermal control system 4 further comprises an electronic control unit 25 which is capable of automatically controlling the temperature T of the air flow F and the rate Q of the air flow F in order to reach or maintain a target temperature Tt in the cabin 1. The target temperature can be set by the user of the vehicle. To that end, the electronic control unit 25 may monitor the outside ambient temperature OAT, by means of the first sensor 51, the temperature of the air blown inside the cabin 1 through the openings 17, 18, 19, and/or the inside ambient temperature IAT in the cabin 1, by means of the second sensor 52. In concrete terms, controlling the air flow temperature T can be achieved by controlling the heater 7 and the cooler 8, while controlling the air flow rate Q can be achieved by controlling the speed of fan 6.

Another parameter that can be set by the thermal control system 4 is the air distribution. The air distribution corresponds to the respective rates of the air sub flows in the air circuits. In other words, the air distribution not only includes the locations from where air is blown inside the cabin 1, but also how much air is blown from each of said locations.

The air distribution can be set manually, through a control board (not shown) which is operationally connected to the electronic control unit 25. Moreover, there can be a programmed set of rules for automatically determining an optimized air distribution which forms a set data of the system 4, and which is generally given by the vehicle manufacturer so as to optimize the regulation of the cabin temperature and to suit most users.

In an implementation of the invention, each air circuit 11, 12, 13 may be equipped with at least a flow controller 26, such as a flap, designed to adjust the rate Q1, Q2, Q3 of the corresponding air sub flow F1, F2, F3 according to air distribution determined by the system or defined by the user. The rate of one air sub flow can be individually set to a chosen level among several levels, the sum of all air sub flow rates being equal to the air flow rate Q.

For example, in a non limitative embodiment, each rate Q1, Q2, Q3 can be set to one of the following levels : 0%, 50%, 100% of the air flow rate Q, while Q1+Q2+Q3=Q. One given sub flow rate can be individually chosen, but if the air flow rate Q remains unchanged, then the rate of the other sub flows will be impacted accordingly.

The invention provides a method for regulating the thermal control system 4 depending on the sun position relative to the cabin 1, as will now be explained.

To that end, the electronic control unit 25 is used to determine a reference temperature Tref on the basis of the temperatures measured by the sensors 51, 52, i.e. the outside ambient temperature OAT measured by the first sensor 51 and the inside ambient temperature IAT measured by the second sensor 52 as schematically illustrated in Figure 3.

The reference temperature Tref is determined according to the following rules:
- if OAT > IAT + δ, then Tref = OAT;
- if IAT > OAT - δ, then Tref = IAT;
with δ being a predetermined value which can typically be comprised between -5°C and 5°C. δ could be 0°C. When δ = 0°C, this means that Tref is the maximum temperature Tmax between the outside ambient temperature OAT and the inside ambient temperature IAT.

In a specific embodiment, Tref can be chosen as the maximum temperature Tmax between the outside ambient temperature OAT and the inside ambient temperature IAT.

The electronic control unit 25 compares WT and Tref, and is capable of detecting when the difference Δ = (WT - Tref) is higher than a predetermined threshold value Δth. This threshold value can typically be comprised between 2 and 5°C, for example around 2°C.

In case Δ > Δth, which can occur when the sun has been located in front of the windscreen for a certain period of time, the electronic control unit 25 can activate a compensation process in order to reduce the thermal effect of the solar radiation through the windscreen for the cabin occupant.

It may be envisaged that this compensation process be activated only after Δ has remained higher than Δth for a predetermined period of time.

The compensation process comprises modifying at least one operational parameter of the thermal control system 4.

In the following description, the operational parameter is the air flow distribution inside the cabin 1, although other embodiments can be envisaged. In concrete terms, when Δ becomes higher than Δth, the electronic control unit 25 controls the flaps 26 in order, for instance, to increase the rate Q1 of the air flow F1 directed towards the cabin windscreen 2.

For example, the rate Q1 of the air flow F1 directed towards the cabin windscreen 2 is increased proportionally to Δ, at least when Δ is lower than a limit value Δlim above which said rate Q1 can remain substantially constant. For example, said limit value Δlim can be comprised between 7 and 15°C.

According to a possible implementation of the compensation process, the rate Q1 of the air flow F1 directed towards the cabin windscreen 2 is Q1 = Q0 + Qadd, where:
- Q0 is the air flow rate set by the thermal control system when the compensation process is not activated;
- Qadd is an additional air flow rate that is calculated proportionally to a compensation value (Vcomp) determined by the equation Vcomp = Δ - Δth, so that Qadd = R x Vcomp with R being a constant value.

For example, with Tref = OAT = 20°C and WT = 25°C, Δ = 5°C. If the value of Δth is chosen as 2°C, then Δ > Δth and the compensation process is activated. In this case, Vcomp = Δ - Δth = 3°C. With R = 0,1, the additional air flow rate Qadd is 0,3 l/s. In case the windscreen temperature becomes higher due to solar radiation, for example WT = 30°, then Vcomp = 8°C, which generates an additional air flow rate Qadd of 0,8 l/s. Owing to the higher rate Q1 of the air flow F1 directed towards the cabin windscreen 2, the regulating method according to the invention helps reducing the thermal effect of solar radiation for the cabin occupant.

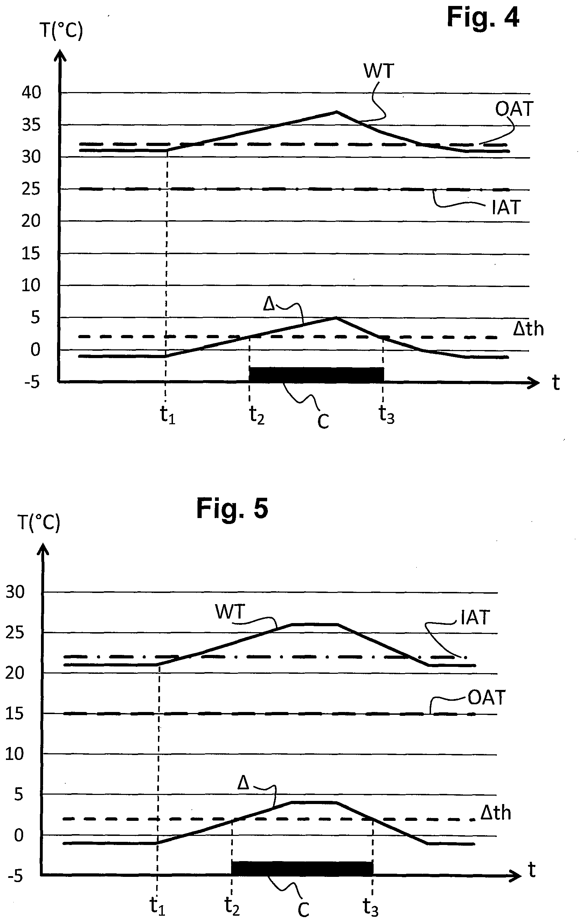

Reference is now made to Figures 4 and 5 which show when a compensation process is activated, depending on the evolution of the various monitored temperatures as a function of time.

Figure 4 shows a case in which OAT > IAT + δ, which can typically happen in summer. In this case, Tref = OAT, which means that WT is compared to OAT.

In the graph, OAT is around 32°C, and IAT is maintained by the thermal control unit 4 around 25°C. For instance, δ can be around 3°C. In another embodiment, δ could be 0°C.

At t1, the windscreen temperature begins to increase, generally due to the solar radiation because the sun is located in front of the windscreen 2. As a result, Δ = (WT - OAT) begins to increase, until it becomes higher than Δth (here around 2°C), at t2. Then, the compensation process C is activated, as schematically illustrated. The compensation process remains active until Δ becomes lower than Δth, at t3, this being due to a decrease in WT resulting from a change in the sun position relative to the cabin 1.

Figure 5 shows a case in which IAT > OAT - δ, which can typically happen in winter, or even in spring and autumn. In this case, Tref = IAT, which means that WT is compared to IAT.

In the graph, OAT is around 15°C, and IAT is maintained by the thermal control unit 4 around 22°C. For instance, δ can be around 3°C. In another embodiment, δ could be 0°C.

At t1, the windscreen temperature begins to increase, generally due to the solar radiation because the sun is located in front of the windscreen 2. As a result, Δ = (WT - IAT) begins to increase, until it becomes higher than Δth (here around 2°C), at t2. Then, the compensation process C is activated, as schematically illustrated. The compensation process remains active until Δ becomes lower than Δth, at t3, this being due to a decrease in WT resulting from a change in the sun position relative to the cabin 1.

The invention is of course not limited to the embodiment described above as an example, but encompasses all technical equivalents and alternatives of the means described as well as combinations thereof, within the scope of the invention as defined by the claims.

## Claims

1. A method for regulating the thermal control system (4) of a cabin (1) of a vehicle (100) depending on the sun position relative to the cabin, the method comprising:
- measuring an outside ambient temperature (OAT);
- measuring an inside ambient temperature (IAT);
- measuring a windscreen temperature
(WT) the method being **characterized by**:
- determining a reference temperature (Tref) according to the following rules:
if OAT > IAT + δ, then Tref = OAT
if IAT > OAT - δ, then Tref = IAT
where δ is a predetermined value which can be positive or negative
- comparing WT and Tref
- if Δ = (WT - Tref) is higher than a predetermined threshold value (Δth), activating a compensation process (C) comprising modifying at least one operational parameter of the thermal control system (4) in order to reduce the thermal effect of the solar radiation through the windscreen (2) for a cabin occupant.

2. The method according to claim 1, **characterized in that** Tref is the maximum temperature (Tmax) between the outside ambient temperature (OAT) and the inside ambient temperature (IAT).

3. The method according to claim 1 or claim 2, **characterized in that** the operational parameter is the air flow distribution inside the cabin (1).

4. The method according to claim 3, **characterized in that** the compensation process (C) comprises increasing the rate (Q1) of the air flow (F1) directed towards the cabin windscreen (2).

5. The method according to any one of claims 1 to 4, **characterized in that** the operational parameter is the global air flow rate (Q), the compensation process (C) comprising increasing said global air flow rate (Q).

6. The method according to any one of claims 1 to 5, **characterized in that** the operational parameter is the air flow temperature (T), the compensation process (C) comprising decreasing said air flow temperature (T).

7. The method according to any one of claims 1 to 6, **characterized in that**, during the compensation process (C), at least one operational parameter is modified as a function of the Δ increase.

8. The method according to claim 7, **characterized in that** the operational parameter is progressively modified as a function of the Δ increase, preferably substantially linearly modified, at least when Δ is lower than a limit value (Δlim).

9. The method according to claim 7 or 8, **characterized in that** the operational parameter remains substantially constant when Δ is higher than a limit value (Δlim).

10. The method according to any one of claims 4 to 9, **characterized in that** the rate (Q1) of the air flow (F1) directed towards the cabin windscreen (2) is increased proportionally to Δ, at least when Δ is lower than a limit value (Δlim).

11. The method according to claim 10, **characterized in that** the rate (Q1) of the air flow (F1) directed towards the cabin is Q1 = Q0 + Qadd, where:
- Q0 is the air flow rate set by the thermal control system (4) when the compensation process is not activated;
- Qadd is an additional air flow rate that is calculated proportionally to a compensation value (Vcomp) determined by the equation Vcomp = Δ - Δth, so that Qadd = R x Vcomp with R being a constant value.

12. The method according to any one of claims 1 to 11, **characterized in that** windscreen temperature (WT) is measured using a temperature sensor (53) forming part of a defog sensor (50) installed on the cabin windscreen (2).

13. The method according to any one of claims 1 to 12, **characterized in that** the windscreen temperature (WT) is measured using a temperature sensor (53) which is designed to be substantially insensitive to infra red light.

14. The method according to any one of claims 1 to 13, **characterized in that** δ is comprised between -5°C and 5°C.

15. The method according to claim 1 or claim 2, **characterized in that** Δth is comprised between 2 and 5°C.

16. The method according to any one of claims 1 to 15, **characterized in that** the compensation process (C) is activated only if Δ remains higher than Δth for a predetermined period of time.

## Patentansprüche

1. Verfahren zum Regulieren des thermischen Steuerungssystems (4) einer Kabine (1) eines Fahrzeugs (100) abhängig von der Sonnenposition relativ zu der Kabine, wobei das Verfahren umfasst:
- Messen einer Außenumgebungstemperatur (OAT);
- Messen einer Innenumgebungstemperatur (IAT);
- Messen einer Windschutzscheibentemperatur (WT),
wobei das Verfahren **gekennzeichnet ist durch**:
- Bestimmen einer Referenztemperatur (Tref) gemäß den folgenden Regeln:
falls OAT > IAT + δ, dann Tref = OAT
falls IAT > OAT - δ, dann Tref = IAT
wobei δ ein vorgegebener Wert ist, der positiv oder negativ sein kann
- Vergleichen von WT und Tref
- falls Δ = (WT - Tref) höher als ein vorgegebener Schwellwert (Δth) ist, Aktivieren eines Kompensationsprozesses (C) umfassend Modifizieren wenigstens eines Betriebsparameters des thermischen Steuerungssystems (4), um die thermische Wirkung der Sonnenstrahlung **durch** die Windschutzscheibe (2) für einen Kabineninsassen zu reduzieren.

2. Verfahren nach Anspruch 1, **dadurch gekennzeichnet, dass** Tref die maximale Temperatur (Tmax) zwischen der Außenumgebungstemperatur (OAT) und der Innenumgebungstemperatur (IAT) ist.

3. Verfahren nach Anspruch 1 oder 2, **dadurch gekennzeichnet, dass** der Betriebsparameter die Luftströmungsverteilung innen in der Kabine (1) ist.

4. Verfahren nach Anspruch 3, **dadurch gekennzeichnet, dass** der Kompensationsprozess (C) ein Erhöhen der Rate (Q1) der in Richtung der Windschutzscheibe (2) gerichteten Luftströmung (F1) umfasst.

5. Verfahren nach einem der Ansprüche 1 bis 4, **dadurch gekennzeichnet, dass** der Betriebsparameter die Gesamtluftströmungsrate (Q) ist, wobei der Kompensationsprozess ein Erhöhen der Gesamtluftströmungsrate (Q) umfasst.

6. Verfahren nach einem der Ansprüche 1 bis 5, **dadurch gekennzeichnet, dass** der Betriebsparameter die Luftströmungstemperatur (T) ist, wobei der Kompensationsprozess (C) ein Senken der Luftströmungstemperatur (T) umfasst.

7. Verfahren nach einem der Ansprüche 1 bis 6, **dadurch gekennzeichnet, dass** während des Kompensationsprozesses (C) wenigstens ein Betriebsparameter als eine Funktion der Δ-Erhöhung modifiziert wird.

8. Verfahren nach Anspruch 7, **dadurch gekennzeichnet, dass** wenigstens dann, wenn Δ niedriger als ein Grenzwert (Δlim) ist, der Betriebsparameter als eine Funktion der Δ-Erhöhung progressiv modifiziert, vorzugsweise im Wesentlichen linear modifiziert, wird.

9. Verfahren nach Anspruch 7 oder 8, **dadurch gekennzeichnet, dass** der Betriebsparameter im Wesentlichen konstant bleibt, wenn Δ höher als ein Grenzwert (Δlim) ist.

10. Verfahren nach einem der Ansprüche 4 bis 9, **dadurch gekennzeichnet, dass** die Rate (Q1) der in Richtung der Kabinenwindschutzscheibe (2) gerichteten Luftströmung (F1) wenigstens dann, wenn Δ niedriger als ein Grenzwert (Δlim) ist, proportional zu Δ erhöht wird.

11. Verfahren nach Anspruch 10, **dadurch gekennzeichnet, dass** die Rate (Q1) der in Richtung der Kabine gerichteten Luftströmung (F1) Q1 = Q0 + Qadd ist, wobei:
- Q0 die Luftströmungsrate ist, die durch das thermische Steuerungssystem (4) eingestellt wird, wenn der Kompensationsprozess nicht aktiviert ist;
- Qadd eine zusätzliche Luftströmungsrate ist, die proportional zu einem Kompensationswert (Vcomp) berechnet wird, der durch die Gleichung Vcomp = Δ - Δth bestimmt wird, so dass Qadd = R x Vcomp, wobei R ein konstanter Wert ist.

12. Verfahren nach einem der Ansprüche 1 bis 11, **dadurch gekennzeichnet, dass** die Windschutzscheibentemperatur (WT) unter Verwendung eines Temperatursensors (53) gemessen wird, der ein Teil eines an der Kabinenwindschutzscheibe (2) installierten Entneblungssensors (50) ist.

13. Verfahren nach einem der Ansprüche 1 bis 12, **dadurch gekennzeichnet, dass** die Windschutzscheibentemperatur (WT) unter Verwendung eines Temperatursensors (53) gemessen wird, der dazu ausgelegt ist, im Wesentlichen unempfindlich für Infrarotlicht zu sein.

14. Verfahren nach einem der Ansprüche 1 bis 13, **dadurch gekennzeichnet, dass** δ zwischen -5°C und 5°C umfasst ist.

15. Verfahren nach Anspruch 1 oder Anspruch 2, **dadurch gekennzeichnet**, das Δth zwischen 2 und 5°C umfasst ist.

16. Verfahren nach einem der Ansprüche 1 bis 15, **dadurch gekennzeichnet, dass** der Kompensationsprozess (C) nur aktiviert wird, falls Δ für einen vorgegebenen Zeitraum höher bleibt als Δth.

## Revendications

1. Procédé pour réguler le système de régulation thermique (4) d'un habitacle (1) d'un véhicule (100) en fonction de la position du soleil par rapport à l'habitacle, le procédé comprenant le fait :
- de mesurer une température ambiante extérieure (OAT) ;
- de mesurer une température ambiante intérieure (IAT) ;
- de mesurer une température de pare-brise (WT), le procédé étant **caractérisé par** le fait :
- de déterminer une température de référence (Tref) selon les règles suivantes :
si OAT > IAT + δ, alors Tref = OAT
si IAT > OAT - δ, alors Tref = IAT
où δ est une valeur prédéterminée qui peut être positive ou négative
- de comparer WT et Tref
- si Δ = (WT - Tref) est supérieure à une valeur seuil prédéterminée (Δth), d'activer un procédé de compensation (C) comprenant le fait de modifier au moins un paramètre opérationnel du système de régulation thermique (4) afin de réduire l'effet thermique du rayonnement solaire à travers le pare-brise (2) pour un occupant d'habitacle.

2. Procédé selon la revendication 1, **caractérisé en ce que** Tref est la température maximale (Tmax) entre la température ambiante extérieure (OAT) et la température ambiante intérieure (IAT).

3. Procédé selon la revendication 1 ou 2, **caractérisé en ce que** le paramètre opérationnel est la distribution de flux d'air à l'intérieur de l'habitacle (1).

4. Procédé selon la revendication 3, **caractérisé en ce que** le procédé de compensation (C) comprend le fait d'augmenter le débit (Q1) du flux d'air (F1) dirigé vers le pare-brise d'habitacle (2).

5. Procédé selon l'une quelconque des revendications 1 à 4, **caractérisé en ce que** le paramètre opérationnel est le débit de flux d'air global (Q), le procédé de compensation (C) comprenant le fait d'augmenter ledit débit de flux d'air global (Q).

6. Procédé selon l'une quelconque des revendications 1 à 5, **caractérisé en ce que** le paramètre opérationnel est la température de flux d'air (T), le procédé de compensation (C) comprenant le fait de diminuer ladite température de flux d'air (T).

7. Procédé selon l'une quelconque des revendications 1 à 6, **caractérisé en ce que**, pendant le procédé de compensation (C), au moins un paramètre opérationnel est modifié en fonction de l'augmentation de Δ.

8. Procédé selon la revendication 7, **caractérisé en ce que** le paramètre opérationnel est progressivement modifié en fonction de l'augmentation de Δ, de préférence modifié de manière essentiellement linéaire, au moins lorsque Δ est inférieure à une valeur limite (Δlim).

9. Procédé selon la revendication 7 ou 8, **caractérisé en ce que** le paramètre opérationnel reste essentiellement constant lorsque Δ est supérieure à une valeur limite (Δlim).

10. Procédé selon l'une quelconque des revendications 4 à 9, **caractérisé en ce que** le débit (Q1) du flux d'air (F1) dirigé vers le pare-brise d'habitacle (2) augmente proportionnellement à Δ, au moins lorsque Δ est inférieure à une valeur limite (Δlim).

11. Procédé selon la revendication 10, **caractérisé en ce que** le débit (Q1) du flux d'air (F1) dirigé vers l'habitacle est Q1 = Q0 + Qadd, où :
- Q0 est le débit de flux d'air défini par le système de régulation thermique (4) lorsque le procédé de compensation n'est pas activé ;
- Qadd est un débit de flux d'air additionnel qui est calculé proportionnellement à une valeur de compensation (Vcomp) déterminée par l'équation Vcomp = Δ - Δth, de sorte que Qadd = R ^{×} Vcomp avec R étant une valeur constante.

12. Procédé selon l'une quelconque des revendications 1 à 11, **caractérisé en ce que** la température de pare-brise (WT) est mesurée en utilisant un capteur de température (53) faisant partie d'un capteur de désembuage (50) installé sur le pare-brise d'habitacle (2).

13. Procédé selon l'une quelconque des revendications 1 à 12, **caractérisé en ce que** la température de pare-brise (WT) est mesurée en utilisant un capteur de température (53) qui est conçu de manière à être essentiellement insensible à la lumière infrarouge.

14. Procédé selon l'une quelconque des revendications 1 à 13, **caractérisé en ce que** δ est comprise entre -5°C et 5°C.

15. Procédé selon la revendication 1 ou 2, **caractérisé en ce que** Δth est comprise entre 2 et 5 °C.

16. Procédé selon l'une quelconque des revendications 1 à 15, **caractérisé en ce que** le procédé de compensation (C) n'est activé que si Δ reste supérieure à Δth pendant une durée prédéterminée.
